(19) Europäisches Patentamt
European Patent Office
Office européen des brevets

(11) **EP 2 311 917 B1**

(12) **EUROPEAN PATENT SPECIFICATION**

(45) Date of publication and mention
of the grant of the patent:
**12.11.2014 Bulletin 2014/46**

(51) Int Cl.:
*C09D 11/00* (2014.01)          *D06P 1/38* (2006.01)
*D06P 3/66* (2006.01)          *D06P 5/00* (2006.01)
*D06P 5/20* (2006.01)          *B41M 5/00* (2006.01)

(21) Application number: **09802892.1**

(22) Date of filing: **24.07.2009**

(86) International application number:
**PCT/JP2009/063254**

(87) International publication number:
**WO 2010/013649 (04.02.2010 Gazette 2010/05)**

(54) **INK SET FOR INKJET PRINTING AND METHOD FOR PRINTING FIBER USING THE SAME**

TINTENSATZ FÜR TINTENSTRAHLDRUCK UND VERFAHREN ZUM BEDRUCKEN VON FASERN DAMIT

ENSEMBLE D'ENCRES POUR IMPRESSION À JET D'ENCRE ET PROCÉDÉ PERMETTANT L'IMPRESSION D'UNE FIBRE UTILISANT CET ENSEMBLE D'ENCRES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **31.07.2008 JP 2008197623**

(43) Date of publication of application:
**20.04.2011 Bulletin 2011/16**

(73) Proprietor: **Nippon Kayaku Kabushiki Kaisha
Chiyoda-ku
Tokyo (JP)**

(72) Inventors:
• **SHIMIZU, Shinsuke**
  **Tokyo 115-8588 (JP)**
• **UMEDA, Mariko**
  **Tokyo 115-8588 (JP)**
• **MIYATA, Akira**
  **Tokyo 115-8588 (JP)**

(74) Representative: **Maiwald, Walter
Maiwald Patentanwalts GmbH
Elisenhof
Elisenstrasse 3
80335 München (DE)**

(56) References cited:
**JP-A- 11 148 035          JP-A- 11 293 136
JP-A- 2002 097 394          JP-A- 2002 241 639
JP-A- 2002 241 639          JP-A- 2004 359 928
JP-A- 2005 047 990          JP-T- 2003 521 572
US-A1- 2003 172 840**

**Description**

TECHNICAL FIELD

The present invention relates to an ink set for ink jet printing, and a method for printing a cellulosic fiber using the same. More specifically, the present invention relates to a reactive dye ink set for ink jet printing that is superior in coloring properties, and in particular, relates to an ink set for ink jet printing that is superior in color reproducibility in a hue range of magenta-violet-blue-cyan, and exhibits favorable discharge stability, and a method for printing a cellulosic fiber using the same.

BACKGROUND ART

Ink jet printing of fibers carried out using an ink jet printer is advantageous as compared with printing methods such as screen printing, roller printing and rotary printing in many aspects in that: a plate making step is not required thereby enabling simplification of steps; a digitalized design can be printed as it is via a computer; various types of products can be produced even in small quantities; the amount of waste liquids of dye color paste and the like can be significantly reduced; and the like. On the other hand, ink jet printing involves a problem of low print processing speed, difficulty in expressing deep colors, and the like as compared with conventional plate-making printing. Therefore, ink jet printing has been predominantly used for producing sample textiles, and for small-scale production.

In recent years, ink jet printing has been increasingly popular as a result of: significant improvement in printing speed of ink jet printers due to technical progress of image processing by means of a computer, and print head manufacturing; and demands on market for digitalization of print designs, as well as diversification and lot reduction in print processing.

As dye inks for ink jet printing, acidic dye inks for polyamide fibers such as silk and nylon; dispersion dye inks for polyester fibers; reactive dye inks for cellulosic fibers such as cotton and rayon; and the like have been commercially available.

In ink jet printing carried out using reactive dyes, an ink set including dye inks of four colors, i.e., black, yellow, magenta and cyan has been generally used. Thus, development of an ink set which is capable of providing printed fabrics having high quality and high fastness properties, and is also superior in discharge stability has been demanded. To meet such demands, a variety of ink sets have been proposed thus far; however, the hue range covered by a screen printing method with conventional ink sets cannot be completely reproduced, whereby a problem of narrow color reproducible range has existed. In attempts to solve this problem, an ink was proposed in Patent Document 1, disclosing an ink for ink jet printing that is a combination of dye inks of yellow, magenta and cyan, each having perceived chromaticity indices a value and b value on a fabric falling within a specific range. However, the ink disclosed in Patent Document 1 is reportedly inferior in color reproducibility in a hue range of magenta-violet-blue-cyan. Accordingly, for the purpose of broadening the color reproducible range in the aforementioned hue range, Patent Document 2 proposes an ink set having dye inks of two colors of blue and magenta, containing an acidic dye as a coloring agent. However, an ink set containing reactive dyes as coloring agents, and having sufficiently broad color reproducible range has not yet been provided.

On the other hand, as a cyan coloring agent suited for reactive dye inks for ink jet printing of cellulosic fibers, for example, C.I. Reactive Blue 15, and 15:1 disclosed in Patent Documents 3 to 5, and the like are known. Furthermore, as a magenta coloring agent, for example, C.I. Reactive Magenta 24, 31 and 245 disclosed in Patent Documents 6 to 8, and the like are known.

Patent Document 1: Japanese Unexamined Patent Application, Publication No. H06-25576
Patent Document 2: Japanese Patent No. 4069696
Patent Document 3: Japanese Unexamined Patent Application, Publication No. H11-148035
Patent Document 4: Japanese Unexamined Patent Application, Publication No. 2002-241639
Patent Document 5: Japanese Patent No. 4076101 Patent Document 6: Japanese Unexamined Patent Application (Translation of PCT Application), Publication No. 2003-521572
Patent Document 7: Japanese Unexamined Patent Application, Publication No. 2004-359928
Patent Document 8: Japanese Unexamined Patent Application, Publication No. 2005-047990

DISCLOSURE OF THE INVENTION

Problems to be Solved by the Invention

The present invention was made in view of the foregoing problems, and an object of the present invention is to provide a reactive dye ink set for ink jet printing that covers a wide color reproducible range, particularly a wide color reproducible range in a hue range of magenta-violet-blue-cyan, and also is favorable in discharge stability.

Means for Solving the Problems

The present inventors thoroughly investigated in order to solve the foregoing problems, and consequently found that an ink set for ink jet printing including inks of at least two colors of cyan and magenta each containing a specific reactive dye as a coloring agent increases color reproducibility in a hue range of particularly magenta-violet-blue-cyan and is also superior in discharge stability. Thus, the present invention was accomplished.

Accordingly, the present invention provides the following.

A first aspect of the invention provides an ink set for ink jet printing, the ink set including at least a cyan ink composition and a magenta ink composition for ink jet printing performed using reactive dyes as coloring agents, in which the cyan ink composition contains C.I. Reactive Blue 15:1 as a coloring agent, and the magenta ink composition contains C.I. Reactive Red 245 as a coloring agent.

A second aspect of the invention provides the ink set for ink jet printing according to the first aspect, in which the total content of the coloring agent in the total mass of the cyan ink composition is 0.5 to 20% by mass, and the total content of the coloring agent in the total mass of the magenta ink composition is 0.5 to 20% by mass.

A third aspect of the invention provides the ink set for ink jet printing according to the first or second aspect, in which the total content of the coloring agent in the total mass of the cyan ink composition is 7 to 15% by mass, and the total content of the coloring agent in the total mass of the magenta ink composition is 7 to 15% by mass.

A fourth aspect of the invention provides the ink set for ink jet printing according to any one of the first to third aspects, in which the entirety of the coloring agent included in the cyan ink composition is C.I. Reactive Blue 15:1, and the entirety of the coloring agent included in the magenta ink composition is C.I. Reactive Red 245.

A fifth aspect of the invention provides a method for printing a cellulosic fiber, the method including the steps of: A) applying an ink to a cellulosic fiber using the ink set according to any one of the first to fourth aspects as the ink with an ink jet printer; B) allowing the coloring agent in the ink composition applied in the step A to react and fix on the cellulosic fiber by heat; and C) washing away unfixed coloring agent remaining in the cellulosic fiber.

A sixth aspect of the invention provides the method for printing a cellulosic fiber according to the fifth aspect further including a step of: D) pretreating the fiber before applying the ink, by applying an aqueous solution containing at least a sizing material, an alkaline substance, an anti-reducing agent, and a hydrotropic agent to the cellulosic fiber.

Effects of the Invention

The present invention can provide an ink set that increases color reproducibility in a hue range of particularly magenta-violet-blue-cyan and that is superior in discharge stability, and a method for printing a cellulosic fiber in which the same is used as an ink.

PREFERRED MODE FOR CARRYING OUT THE INVENTION

The ink set of the present invention is an ink set for use in ink jet printing of a cellulosic fiber and a fabric constituted with the fiber (hereinafter, referred to as "cellulosic fiber" including these two for the sake of simplicity), etc., and includes dye ink compositions of at least two colors of cyan and magenta. The ink set may be characterized in that the cyan ink composition contains C.I. Reactive Blue 15:1 as a coloring agent, and the magenta ink composition contains C.I. Reactive Red 245 as a coloring agent. The ink compositions of two colors of cyan and magenta may further contain a dye other than the reactive dye described above, for the purpose of minor adjustment of the color tone. However, the effect of increasing the color reproducibility to a higher level than conventional products can be achieved by only the ink set of the present invention including the ink compositions of at least two colors containing the aforementioned reactive dyes. Therefore, in the ink set of the present invention, the entirety of the coloring agent included in the cyan ink composition may be C.I. Reactive Blue 15:1, and the entirety of the coloring agent included in the magenta ink composition may be C.I. Reactive Red 245. The total content of the coloring agent in each of the total mass of the cyan ink composition and the magenta ink composition is preferably 0.5 to 20% by mass, and more preferably 7 to 15% by mass.

When the ink set of the present invention is provided as an ink set including ink compositions of four colors by adding black and yellow ink compositions in addition to the ink compositions of the aforementioned two colors, full color printing can be realized. Coloring agents contained in the black and yellow ink compositions may be well-known compounds, and not particularly limited; however, dyes are more preferred than pigments, and reactive dyes are still more preferred.

The cyan ink composition used in the ink set of the present invention may contain other coloring agent for the purpose of adjustment of the color tone, in the range not leading to impairment of the effects of the present invention.

As the coloring agent which may be used for adjusting the color tone, for example, blue dyes such as C.I. Reactive Blue 2, 5, 10, 13, 14, 15, 49, 63, 71, 72, 75, 162 and 176 are exemplified. In addition, another reactive dye may be further contained. The blend ratio of C.I. Reactive Blue 15:1 to the blue dye contained as another coloring agent on mass basis is typically 50/50 to 100/0, preferably 75/25 to 100/0, and more preferably 90/10 to 100/0.

The magenta ink composition used in the ink set of the present invention may contain other coloring agent for the purpose of adjustment of the color tone, in the range not leading to impairment of the effects of the present invention. As the coloring agent which may be used for adjusting the color tone, for example, red dyes such as the coloring agent C.I. Reactive Red 3, 3:1, 4, 13, 24, 29, 31, 33, 125, 151, 206, 218 and 226 are exemplified. In addition, another reactive dye may be further contained. The blend ratio of C.I. Reactive Red 245 to the red dye contained as another coloring agent on mass basis is typically 50/50 to 100/0, preferably 75/25 to 100/0, and more preferably 90/10 to 100/0.

As the coloring agent contained in the yellow ink composition which may be used when the ink set of the present invention is used as an ink set including ink compositions of four colors, for example, C.I. Reactive Yellow 2, 3, 18, 81, 84, 85, 95, 99, 102 and the like are exemplified, and C.I. Reactive Yellow 2 and/or 95 are preferred. Moreover, the content of the coloring agent in the total mass of the yellow ink composition is typically 0.5 to 20% by mass, and preferably 7 to 15% by mass.

As the coloring agent contained in the black ink composition which may be used when the ink set of the present invention is used as an ink set including ink compositions of four colors, for example, black dyes such as C.I. Reactive Black 1, 8, 23 and 39 are exemplified, and in particular, C.I. Reactive Black 8 is preferred. Moreover, the content of the coloring agent in the total mass of the black ink composition is typically 0.5 to 20% by mass, and preferably 10 to 20% by mass.

In the black ink composition, a mixed dye may be also used as a coloring agent which includes a blue dye as a principal component blended with orange and red dyes and the like. Moreover, other dye may be further blended in the black ink composition for the purpose of adjusting the color tone.

Examples of the coloring agent which may be blended in the black ink composition include orange dyes such as C.I. Reactive Orange 5, 9, 12, 13, 35, 45, and 99; brown dyes such as C.I. Reactive Brown 2, 8, 9, 17, and 33; red dyes such as C.I. Reactive Red 3, 3:1, 4, 13, 24, 29, 31, 33, 125, 151, 206, 218, 226, and 245; violet dyes such as C.I. Reactive Violet 1, and 24; blue dyes such as C.I. Reactive Blue 2, 5, 10, 13, 14, 15, 15:1, 49, 63, 71, 72, 75, 162, and 176; green dyes such as C.I. Reactive Green 5, 8, and 19. In particular, orange, red, and blue dyes are preferably blended. In addition, the total content of the coloring agent in the total mass of the black ink composition may fall within the aforementioned range including these coloring agents which may be blended.

The ink set of the present invention may be provided as an ink set of 5 to 14 colors by adding ink compositions of light yellow, light magenta, light cyan, light black, blue, violet, red, orange, green, golden yellow, etc., which may be generally referred to as "special color" as needed, to the aforementioned ink set of four colors, i.e., the ink set including each ink composition of cyan, magenta, yellow, and black, whereby printing with more variable hue may be also realized.

Of the special colors described above, with respect to the ink compositions of light yellow, light magenta, light cyan and light black, ink compositions prepared by reducing the dye density of the aforementioned ink compositions of four colors, respectively, i.e., each of the ink compositions of cyan, magenta, yellow, and black, may be used. The dye concentration ratio on mass basis of the ink compositions of light yellow, light magenta, light cyan and light black to each of the ink compositions of cyan, magenta, yellow, and black is typically no greater than 1/2, preferably no greater than 1/4, and more preferably no greater than 1/6, whereas the lower limit may be about 1/20, and preferably 1/10.

Furthermore, the coloring agents to be contained in the light yellow ink, light magenta ink, light cyan ink and light black ink compositions are preferably the same as those contained in the ink compositions of four colors, i.e., cyan, magenta, yellow, and black, respectively.

Of the aforementioned special colors, examples of the coloring agent contained in the orange ink composition include C.I. Reactive Orange 5, 9, 12, 13, 35, 45, 99 and the like, and C.I. Reactive Orange 12 and/or 13 are preferred. In addition, the content of the coloring agent in the total mass of the orange ink composition is typically 0.5 to 20% by mass, and preferably 7 to 15% by mass.

Of the aforementioned special colors, examples of the coloring agent contained in the golden yellow ink composition include C.I. Reactive Orange 5, 9, 12, 13, 35, 45, 99 and the like, and C.I. Reactive Orange 12 and/or 13 are preferred. In addition, the content of the coloring agent in the total mass of the golden yellow ink composition is typically 0.5 to 20% by mass, and preferably 7 to 15% by mass.

Of the aforementioned special colors, examples of the coloring agent contained in the red ink composition include C.I. Reactive Red 3, 3:1, 4, 13, 24, 29, 31, 33, 125, 151, 206, 218, 226, 245 and the like, and C.I. Reactive Red 3:1 and/or 24 are preferred. In addition, the content of the coloring agent in the total mass of the red ink composition is typically 0.5 to 20% by mass, and preferably 7 to 15% by mass.

Of the aforementioned special colors, examples of the coloring agent contained in the blue ink composition include C.I. Reactive Blue 2, 5, 10, 13, 14, 15, 15:1, 49, 63, 71, 72, 75, 162, 176 and the like, and C.I. Reactive Blue 49 is preferred. In addition, the content of the coloring agent in the total mass of the blue ink composition is typically 0.5 to 20% by mass, and preferably 7 to 15% by mass.

Of the aforementioned special colors, examples of the coloring agent contained in the green ink composition include C.I. Reactive Green 5, 8, 19, and the like. In addition, the content of the coloring agent in the total mass of the green ink composition is typically 0.5 to 20% by mass, and preferably 7 to 15% by mass.

Of the aforementioned special colors, examples of the coloring agent contained in the violet ink composition include C.I. Reactive Violet 1, 24, and the like. In addition, the content of the coloring agent in the total mass of the violet ink composition is typically 0.5 to 20% by mass, and preferably 7 to 15% by mass.

The coloring agents of each color illustrated as the special colors may be used alone to provide each hue, or may be used as an ink composition having each special color prepared by blending to give a mixed dye. For example, as the coloring agent in the violet ink composition, C.I. Reactive Violet 1 or 24 may be used alone, or these may be used after blending.

The reactive dye which may be used is a dye in the form of: powder; block; wet cake or the like. There are commercially available such reactive dyes having a variety of qualities such as powder for industrial dyeing, liquid products for textile printing, and dyes for use in ink jet printing; and their production method, purity and the like vary, respectively. Some of them may contain an inorganic salt such as sodium chloride or sodium sulfate in a considerable amount (about 10% by mass to 40% by mass in total mass of the product). Each ink composition that constitutes the ink set of the present invention is preferably prepared using a material including impurities as low as possible in order to minimize adverse effects on storage stability and accuracy of discharge from ink jet printers. Additionally, water not purified particularly and the like may contain metal ions such as a calcium ions and magnesium ions; therefore, the ions and the like will be included in the ink composition also when prepared using such water or the like, although the amount of the contaminants may be slight. For the sake of simplicity, the aforementioned inorganic salts and metal ions altogether are referred to as "inorganic impurities" herein below. These inorganic impurities not only significantly deteriorate storage stability and solubility of the dye in the ink composition and the like, but also may be the cause of corrosion and abrasion of ink jet printer heads. In order to eliminate these inorganic impurities, it is preferred that a well-known process such as an ultrafiltration process, a reverse osmosis process or an ion exchange process be utilized to eliminate the inorganic impurities included in the ink composition as far as possible. The content of the inorganic impurities included in the total mass of the ink composition is generally no more than 1% by mass, preferably no more than 0.5% by mass, and more preferably no more than 0.1% by mass.

It is preferred that each ink composition that constitutes the ink set of the present invention has a viscosity at 25°C as measured with an E type viscometer in the range of generally 3 to 20 mPa·s.

Similarly, the surface tension of these ink compositions preferably falls within the range of generally 20 to 40 mN/m as measured with a plate method. The viscosity of each of the ink compositions may be adjusted to an appropriate value within the above range, taking into consideration flight characteristics of the ink droplets, the amount of discharge, response speed, characteristics of the ink jet head and the like of the printer used.

Each ink composition that constitutes the ink set of the present invention may contain a water soluble organic solvent. To contain a water soluble organic solvent in the ink composition constituting the ink set of the present invention is more preferred since a water soluble organic solvent may have a function as a viscosity adjusting agent or a drying inhibitor. Moreover, since the ink set of the present invention is constituted with ink compositions containing a reactive dye, a solvent that does not react with the dye in the ink composition, and that has a high wetting effect in order to prevent clogging at the nozzle in the ink jet printer, and the like, is preferably used.

As the water soluble organic solvent described above, polyhydric alcohols, pyrrolidones and the like may be exemplified. As the polyhydric alcohols, for example, C2-C6 polyhydric alcohols having two to three alcoholic hydroxyl groups, poly C2-C3 alkylene glycols having four or more repeating units and having a molecular weight of no higher than about 20,000, and preferably liquid polyalkylene glycols, etc., may be exemplified. Among these, C2-C3 alkylene glycols and pyrrolidones are preferred, and the formers are preferred.

Specific examples of the water soluble organic solvent include: C2-C6 polyhydric alcohols having two to three alcoholic hydroxyl groups such as glycerin, 1,3-pentanediol and 1,5-pentanediol; polyglyceryl ethers such as diglycerin and polyglycerin; polyoxy C2-C3 alkylene polyglyceryl ethers such as polyoxyethylene polyglyceryl ether and polyoxypropylene polyglyceryl ether; mono-, di-, or tri- C2-C3 alkylene glycols such as ethylene glycol, diethylene glycol, triethylene glycol, propylene glycol and polyethylene glycol; poly C2-C3 alkylene glycols such as polyethylene glycol and polypropylene glycol; pyrrolidones such as 2-pyrrolidone and N-methyl-2-pyrrolidone; and the like. Among these, propylene glycol and 2-pyrrolidone are preferred.

The water soluble organic solvent is used either alone or in combination.

Each ink composition that constitutes the ink set of the present invention may further contain in addition to the aforementioned water soluble organic solvent, agents for preparing inks such as, for example, a surfactant, a pH adjusting agent, and a preservative fungicide. The surface tension of the ink compositions is preferably adjusted with any one of a variety of surfactants i.e., anionic surfactants, cationic surfactants, amphoteric surfactants, nonionic surfactants and the like.

Examples of the anionic surfactant include alkylsulfocarboxylic acid salts, α-olefin sulfonic acid salts, polyoxyethylene alkyl ether acetic acid salts, N-acylamino acids or salts thereof, N-acylmethyltaurine salts, alkylsulfuric acid salts, polyoxyalkyl ether sulfuric acid salts, alkylsulfuric acid salts, polyoxyethylene alkyl ether phosphoric acid salts, rosin acid soap, castor oil sulfate ester salts, lauryl alcohol sulfate ester salts, alkylphenolic phosphate esters, alkylated phosphate esters, alkylarylsulfonic acid salts, diethyl sulfosuccinic acid salts, diethylhexyl sulfosuccinic acid salts, dioctyl sulfosuccinic acid salts, and the like.

Examples of the cationic surfactant include 2-vinylpyridine derivatives, poly4-vinylpyridine derivatives, and the like.

Examples of the amphoteric surfactant include lauryldimethylamino acetate betaine, 2-alkyl-N-carboxymethyl-N-hydroxyethylimidazolinium betaine, coconut oil fatty acid amidopropyldimethylamino acetate betaine, polyoctylpolyaminoethylglycine, imidazoline derivatives, and the like.

Examples of the nonionic surfactant include: ether based surfactants such as polyoxyethylene nonylphenyl ether, polyoxyethylene octylphenyl ether, polyoxyethylene dodecylphenyl ether, polyoxyethylene oleyl ether, polyoxyethylene lauryl ether and polyoxyethylene alkyl ether; ester based surfactants such as polyoxyethylene oleate esters, polyoxyethylene distearate esters, sorbitan laurate, sorbitan monostearate, sorbitan monooleate, sorbitan sesquioleate, polyoxyethylene monooleate and polyoxyethylene stearate; acetylene alcohol based surfactants such as 2,4,7,9-tetramethyl-5-decyne-4,7-diol, 3,6-dimethyl-4-octyne-3,6-diol and 3,5-dimethyl-1-hexin-3-ol; and other specific examples include trade names Surfynol 104, 82, 440 and 465, Olfin STG manufactured by Nissin Chemical Co., Ltd.; and the like. The surfactant is preferably of Surfynol series, and more preferably Surfynol 440.

It is preferred that each ink composition that constitutes the ink set of the present invention further contains tris(hydroxymethyl)aminomethane as a pH adjusting agent. The content of tris(hydroxymethyl)aminomethane in the total mass of the each ink composition is typically 0.1 to 2% by mass, and preferably 0.3 to 1.5% by mass.

Furthermore, to each ink composition that constitutes the ink set of the present invention may be added an ink preparation agent such as a preservative fungicide; a pH adjusting agent other than tris(hydroxymethyl)aminomethane; and the like if necessary. These ink preparation agents may be added in an amount of typically about 0 to 10% by mass, and preferably about 0.05 to 5% by mass in total, relative to the total mass of the ink composition.

Examples of the preservative fungicide include sodium dehydroacetate, sodium benzoate, sodium pyridinethione-1-oxide, zinc pyridinethione-1-oxide, 1,2-benzisothiazolin-3-one, 1-benzisothiazolin-3-one amine salts, Proxel GXL manufactured by Avecia, Inc., and the like, and Proxel GXL is preferred among these. Examples of the pH adjusting agent include alkali hydroxides such as sodium hydroxide, potassium hydroxide, and lithium hydroxide; tertiary amines such as triethanolamine, diethanolamine, dimethylethanolamine, and diethyl ethanolamine; and the like. The ink composition of the present invention may be prepared by mixing the aforementioned each component with water appropriately, by a method well known per se, such as stirring.

Each ink composition that constitutes the ink set of the present invention contains at least one or more types of the reactive dye as the coloring matter, and water in the total mass thereof. The each ink composition preferably contains a water soluble organic solvent in addition thereto, and more preferably further contains a pH adjusting agent.

The content of each component in the total mass of the each ink composition is described below, and any of these is on mass basis.

The content of the reactive dye contained as a coloring matter is typically 0.5 to 20%, and preferably 7 to 15%.

Furthermore, when a water soluble organic solvent is contained, the proportion is similarly, typically 1 to 50%, and preferably 5 to 40%. The remainder other than the aforementioned components is water.

In addition, when the pH adjusting agent, preferably tris(hydroxymethyl)aminomethane is further contained, the proportion may be similar to the amount described above.

As the other agents for preparing inks which may be contained in the each ink composition, preferably a cationic surfactant, and a preservative fungicide are included. When these components are contained, the proportion in total is 0 to 10%, and preferably 0.05 to 5% on mass basis based on the total mass of the ink composition.

Each ink composition that constitutes the ink set of the present invention is obtained by mixing as needed the aforementioned components, respectively, and stirring the mixture until the solid contents such as the dye are dissolved. When used in ink jet printing, it is preferred to use the each ink composition from which contaminants were eliminated by filtrating with a membrane filter or the like. The pore size of the membrane filter is typically 1 to 0.1 μm, and preferably 0.5 to 0.1 μm.

It is to be noted that the type of the water soluble organic solvent and ink preparation agents contained in the each ink composition may be selected each independently from the above illustrative examples, but to use the same components is preferred. Moreover, the contents of the coloring agent, the water soluble organic solvent, ink preparation agents and the like in each ink composition are not necessarily the same for each color, and are preferably adjusted ad libitum taking into consideration the viscosity and the like of the composition, depending on the properties, etc., of the coloring agent contained.

In the ink jet printing method of the present invention, the ink set of the present invention is used to execute the printing on a cellulosic fiber, preferably a fabric made from the fiber. The ink nozzle and the like used in this method are not particularly limited, and may be selected appropriately in accordance with the purpose. The fabric is preferably constituted predominantly with a cellulosic fiber, and examples thereof include natural fibers such as cotton and hemp, regenerated cellulose fibers such as rayon, blend fibers containing these fibers, and the like.

As a method for printing a cellulosic fiber using the ink set of the present invention, for example, a method in which the three steps of: (step A) applying an ink to a cellulosic fiber using the ink set of the present invention as the ink with an ink jet printer; (step B) allowing the coloring agent in the ink composition applied in the step A to react and fix on the fiber by heat; and (step C) washing away unfixed coloring agent remaining in the fiber are sequentially carried out is exemplified. Preferably, the method further includes a step of subjecting the cellulosic fiber to a pretreatment such as anti-bleeding (step D).

In the step A, for example, vessels each filled with the ink composition are attached to a specified position of an ink jet printer, and the ink may be applied to a cellulosic fiber by discharging ink droplets of the ink in response to recording signals using each ink composition as an ink according to a general ink jet recording method. In the ink jet recording method, each ink compositions of yellow, black, and as needed, light yellow, light magenta, light cyan, light black, orange, blue, red, golden yellow, green, violet, etc., may be used together with the ink compositions of the present invention. In this case, the ink composition of each color is injected into each vessel, and the vessels are attached at a specified position of the ink jet printer and then used. There are ink jet printers in which, for example, a piezo system utilizing mechanical vibration; or the like is adopted.

The ink jet recording method of the present invention can be employed according to any system.

As the aforementioned step B, i.e., the step of allowing the dye to react and fix, for example, a process in which after the ink was applied on the cellulosic fiber as described above, the fiber is left to stand at a room temperature to 130°C for 0.5 to 30 min to permit preliminary drying, followed by carrying out a steaming treatment to allow the coloring agent to fix on the fiber under wet and hot conditions, and the like may be exemplified. The steaming treatment is preferably carried out by allowing standing in an environment of a humidity of 80 to 100%, and a temperature of 95 to 105°C for 5 to for 20 min.

In the aforementioned step C, i.e., a step of washing away unfixed dye, it is preferred that the cellulosic fiber after subjecting to the steaming treatment is washed with warm water, and additionally with water if necessary. In the water which may be warm, a surfactant may be blended.

Thereafter, the fiber is dried at 50 to 120°C for 5 to 30 min, whereby a printed fiber can be obtained.

Although the aforementioned step D, i.e., a step of subjecting the cellulosic fiber to a pretreatment is not a prerequisite in the printing method of the present invention, in light of prevention of bleeding of the coloring agent on the printed fiber, it is preferred to carry out the three steps of A to C described above after subjecting the fiber to a pretreatment in the step D.

In the step of subjecting the fabric to a pretreatment, it is preferred that an aqueous solution of a pretreatment agent including a sizing agent, an alkaline substance, an anti-reducing agent and a hydrotropic agent be used as a pretreatment liquid for application to the fabric, and the aqueous solution is applied to a cellulosic fiber, preferably applied by impregnating the fiber with the treatment liquid.

Examples of the sizing agent include natural gums such as guar and locust bean; starches; sodium alginate; seaweeds such as and funori (glue plant); plant skin/sheath components such as pectic acid; cellulose derivatives such as methyl cellulose, ethyl cellulose, hydroxyethyl cellulose and carboxymethyl cellulose; processed starches such as carboxymethyl starch; synthetic sizes such as polyvinyl alcohol and polyacrylic esters; and the like. The sizing agent is preferably sodium alginate.

Examples of the alkaline substance include alkali metal salts of an inorganic acid or organic acid; salts of an alkaline earth metal; and compounds that release an alkali when heated. Alkali metal hydroxides and alkali metal salts of an inorganic acid or organic acid are preferred, and examples include sodium compounds, potassium compounds, and the like. Specific examples include alkali metal hydroxides such as sodium hydroxide and calcium hydroxide; alkali metal salts of an inorganic compound such as sodium carbonate, sodium bicarbonate, potassium carbonate, sodium dihydrogen phosphate, disodium hydrogen phosphate and sodium phosphate; alkali metal salts of an organic compound such as sodium formate and sodium trichloroacetate; and the like. The alkaline substance is preferably sodium bicarbonate.

The anti-reducing agent is preferably sodium meta-nitrobenzene sulfonate. Examples of the hydrotropic agent include ureas such as urea and alkylurea, and urea is preferred.

The aforementioned four types of pretreatment agents, i.e., a sizing agent, an alkaline substance, an anti-reducing agent, and a hydrotropic agent, may be used either alone or in combination, but use in combination is preferred. Each of the pretreatment agents may be used either alone or in combination.

Exemplary mixing ratio of the pretreatment agents in the total mass of the pretreatment liquid is, for example, 0.5 to 5% of the sizing agent, 0.5 to 5% of sodium bicarbonate, 0 to 5% of sodium meta-nitrobenzene sulfonate, 1 to 20% of urea, all on the mass basis, and water for the balance.

The application of the pretreatment agents to the cellulosic fiber is exemplified by a padding method. The drawing rate in the padding is preferably about 40 to 90%, and more preferably about 60 to 80%.

EXAMPLES

Hereinafter, the present invention is explained in more detail by way of Examples, but the present invention is not limited to these Examples. In Examples, unless otherwise stated in particular, the term "part" means "part by mass", and "%" means "% by mass", respectively.

[Examples 1 to 4]

After each ink composition was obtained by mixing the components as described in each Example below and stirring the mixture for about 1 hour until the solid contents were dissolved, thus resulting solution was filtered through a 0.45 μm membrane filter (trade name, Cellulose Acetate Filter Paper, manufactured by Advantec Toyo Kaisha, Ltd.,) to prepare an ink for tests. Note that C.I. Reactive Red 245, trade name Novacron Red P-4B, manufactured by Huntsman Co.; and C.I. Reactive Blue 15:1, trade name Kayacion Turquoise P-3GF, manufactured by Nippon Kayaku Co., Ltd., were both used after purification, respectively, by a reverse osmosis method. An ink set including the ink compositions of two colors of Examples 1 and 2 corresponds to the ink set of the present invention. In addition, Examples 3 and 4 prepared inks having a violet or blue hue by blending the coloring agents of Examples 1 and 2 in order to verify the effects achieved by the ink set of the present invention. In these Examples, the inks are referred to as each a violet ink or blue ink for the sake of simplicity.

[Example 1 (Magenta Ink)]

C.I. Reactive Red 245: 12 parts
Tris(hydroxymethyl)aminomethane: 0.5 parts
Propylene glycol: 25 parts
Surfynol 440: 0.1 parts
Proxel GXL: 0.1 parts
Ion exchanged water: 62.3 parts

[Example 2 (Cyan Ink)]

C.I. Reactive Blue 15:1: 12 parts
Tris(hydroxymethyl)aminomethane: 0.5 parts
Propylene glycol: 25 parts
Surfynol 440: 0.1 parts
Proxel GXL: 0.1 parts
Ion exchanged water: 62.3 parts

[Example 3 (Violet Ink, Blend Of Magenta : Cyan = 1:1)]

C.I. Reactive Red 245: 6 parts
C.I. Reactive Blue 15:1: 6 parts
Tris(hydroxymethyl)aminomethane: 0.5 parts
Propylene glycol: 25 parts
Surfynol 440: 0.1 parts
Proxel GXL: 0.1 parts
Ion exchanged water: 62.3 parts

[Example 4 (Blue Ink, Blend Of Magenta : Cyan = 1:3)]

C.I. Reactive Red 245: 3 parts
C.I. Reactive Blue 15:1: 9 parts
Tris(hydroxymethyl)aminomethane: 0.5 parts
Propylene glycol: 25 parts
Surfynol 440: 0.1 parts
Proxel GXL: 0.1 parts
Ion exchanged water: 62.3 parts

[Comparative Examples 1 to 7]

An ink of each Comparative Example was prepared similarly to Examples except that C.I. Reactive Red 31, 24 or 245 was used in place of the magenta coloring agent used in Examples, and that C.I. Reactive Blue 15 was used each in place of the cyan coloring agent. Note that C.I. Reactive Red 31, trade name Procion Red P-8B, manufactured by DyStar Colours Distribution GmbH; C.I. Reactive Red 24, trade name Kayacion Red P-2B, manufactured by Nippon Kayaku Co., Ltd.; and C.I. Reactive Blue 15, trade name Novacron Turquoise P-GR manufactured by Huntsman Co., were used after purification, respectively, by a reverse osmosis method.

[Comparative Example 1 (Magenta Ink)]

C.I. Reactive Red 31: 12 parts
Tris(hydroxymethyl)aminomethane: 0.5 parts
Propylene glycol: 25 parts
Surfynol 440: 0.1 parts
Proxel GXL: 0.1 parts
Ion exchanged water: 62.3 parts

[Comparative Example 2 (Magenta Ink)]

C.I. Reactive Red 24: 12 parts
Tris(hydroxymethyl)aminomethane: 0.5 parts
Propylene glycol: 25 parts
Surfynol 440: 0.1 parts
Proxel GXL: 0.1 parts
Ion exchanged water: 62.3 parts

[Comparative Example 3 (Cyan Ink)]

C.I. Reactive Blue 15:12 parts
Tris(hydroxymethyl)aminomethane: 0.5 parts
Propylene glycol: 25 parts
Surfynol 440: 0.1 parts
Proxel GXL: 0.1 parts
Ion exchanged water: 62.3 parts

[Comparative Example 4 (Violet Ink, Blend of Magenta : Cyan = 1:1)]

C.I. Reactive Red 31: 6 parts
C.I. Reactive Blue 15: 6 parts
Tris(hydroxymethyl)aminomethane: 0.5 parts
Propylene glycol: 25 parts
Surfynol 440: 0.1 parts
Proxel GXL: 0.1 parts
Ion exchanged water: 62.3 parts

[Comparative Example 5 (Violet Ink, Blend of Magenta: Cyan = 1:1)]

C.I. Reactive Red 24: 6 parts
C.I. Reactive Blue 15: 6 parts
Tris(hydroxymethyl)aminomethane: 0.5 parts
Propylene glycol: 25 parts
Surfynol 440: 0.1 parts
Proxel GXL: 0.1 parts
Ion exchanged water: 62.3 parts

[Comparative Example 6 (Blue Ink, Blend of Magenta: Cyan = 1:3)]

C.I. Reactive Red 24: 3 parts
C.I. Reactive Blue 15: 9 parts
Tris(hydroxymethyl)aminomethane: 0.5 parts
Propylene glycol: 25 parts
Surfynol 440: 0.1 parts
Proxel GXL: 0.1 parts
Ion exchanged water: 62.3 parts

[Comparative Example 7 (Violet Ink, Blend of Magenta : Cyan = 1:1)]

C.I. Reactive Red 245: 6 parts
C.I. Reactive Blue 15: 6 parts
Tris(hydroxymethyl)aminomethane: 0.5 parts
Propylene glycol: 25 parts
Surfynol 440: 0.1 parts
Proxel GXL: 0.1 parts
Ion exchanged water: 62.3 parts

[Preparation of Test Print Fabric]

To a cotton fabric which had been subjected to a pretreatment using an aqueous solution containing sodium alginate, urea, sodium bicarbonate and sodium meta nitro benzene sulfonate by a padding method was executed textile-printing of a solid pattern using the ink of Example 1 with an ink jet printer PM-A750 (manufactured by Seiko Epson Corporation). After this printed fabric was subjected to intermediate drying at 60 to 80°C, a steaming treatment was carried out at 100 to 103°C for 10 min. After washing with water, the fabric was washed with boiling water at 95 to 100°C for 10 min, followed by washing with water and drying to obtain a test print fabric. This test print fabric was referred to as "Printed Fabric 1".

Each test print fabric was obtained with the ink of each Example or Comparative Example in a similar manner to Example 1 except that the ink of any one of Examples 2 to 4, and Comparative Examples 1 to 7 was used in place of the ink of Example 1. These are referred to as "Printed Fabrics 2 to 4" and "Comparative Printed Fabrics 1 to 7", respectively.

[Evaluation of Hue of Each Printed Fabric]

The hue was evaluated on each test print fabric obtained as described above. The hue was determined by colorimetric measurement of the printed fabrics using a colorimetric photometer manufactured by GRETAG-MACBETH AG, trade name SpectroEye to measure a* and b*. In addition, chroma saturation C* was determined from thus derived values according to the following formula. Greater values of the chroma saturation suggest more favorable results, indicating higher brilliance.

$$C^* = [(a^*)^2 + (b^*)^2]^{1/2}$$

The results are shown in Table 1 below.

[Table 1]

|  | a* | b* | c* |
|---|---|---|---|
| Printed Fabric 1 (magenta) | 67 | 2 | 67 |
| Printed Fabric 2 (cyan) | -29 | -38 | 48 |
| Printed Fabric 3 (violet) | 30 | -31 | 43 |
| Printed Fabric 4 (blue) | 0 | -38 | 38 |
| Comparative Printed Fabric 1 (magenta) | 64 | -5 | 64 |
| Comparative Printed Fabric 2 (magenta) | 58 | 12 | 59 |
| Comparative Printed Fabric 3 (cyan) | -31 | -29 | 42 |
| Comparative Printed Fabric 4 (violet) | 22 | -30 | 37 |
| Comparative Printed Fabric 5 (violet) | 25 | -28 | 38 |
| Comparative Printed Fabric 6 (blue) | -3 | -31 | 31 |
| Comparative Printed Fabric 7 (violet) | 28 | -28 | 40 |

As is clear from the results shown in Table 1, any of the printed fabric produced using the ink set of the present invention for ink jet printing each exhibited high chroma saturation as compared with each Comparative Example. More specifically, by comparing Printed Fabrics 1 to 4 with Comparative Printed Fabrics 1 to 6, it was revealed that in the case of Printed Fabrics 1 to 4 produced using the ink set of the present invention, and Printed Fabrics 1 to 6 produced using the dye of corresponding Comparative Examples 1 to 6, higher chroma saturation was exhibited even if the ink set of the present invention was blended at any proportion of the blended dye. Additionally, also when Printed Fabric 3 and Comparative Printed Fabric 7 were compared in which the same magenta coloring agent was used but a different cyan coloring agent was used, Printed Fabric 3 exhibited higher chroma saturation, indicating that the ink set of the present invention resulted in extremely high chroma saturation. From the foregoing results, as compared with each Comparative Printed Fabric, each Printed Fabric of Examples exhibited higher chroma saturation in the hue range of magenta-violet-blue-cyan, whereby the Printed Fabrics were ascertained to provide a color reproducible range, and had high qualities.

INDUSTRIAL APPLICABILITY

The ink set of the present invention for ink jet printing enables a printed fabric with a color reproducible range in the hue of, in particular, magenta-violet-blue-cyan to be provided.

**Claims**

1.    An ink set for ink jet printing, the ink set comprising at least a cyan ink composition and a magenta ink composition for ink jet printing performed using reactive dyes as coloring agents, wherein
the cyan ink composition contains C.I. Reactive Blue 15:1 as a coloring agent, and
the magenta ink composition contains C.I. Reactive Red 245 as a coloring agent.

2. The ink set for ink jet printing according to claim 1, wherein the total content of the coloring agent in the total mass of the cyan ink composition is 0.5 to 20% by mass, and the total content of the coloring agent in the total mass of the magenta ink composition is 0.5 to 20% by mass.

3. The ink set for ink jet printing according to claim 1 or 2, wherein the total content of the coloring agent in the total mass of the cyan ink composition is 7 to 15% by mass, and the total content of the coloring agent in the total mass of the magenta ink composition is 7 to 15% by mass.

4. The ink set for ink jet printing according to any one of claims 1 to 3, wherein the entirety of the coloring agent included in the cyan ink composition is C.I. Reactive Blue 15:1, and the entirety of the coloring agent included in the magenta ink composition is C.I. Reactive Red 245.

5. A method for printing a cellulosic fiber, the method comprising the steps of:

A) applying an ink to a cellulosic fiber using the ink set according to any one of claims 1 to 4 as the ink with an ink jet printer;
B) allowing the coloring agent in the ink composition applied in the above step to react and fix on the cellulosic fiber by heat; and
C) washing away unfixed coloring agent remaining in the cellulosic fiber.

6. The method for printing a cellulosic fiber according to claim 5 further comprising a step of:

D) pretreating the fiber before applying the ink, by applying an aqueous solution containing at least a sizing material, an alkaline substance, an anti-reducing agent, and a hydrotropic agent to the cellulosic fiber.


**Patentansprüche**

1. Ein Tinten-Set zum Tintenstrahldrucken, das Tinten-Set umfassend mindestens eine Cyan-Tintenzusammensetzung und eine Magenta-Tintenzusammensetzung für das Tintenstrahldrucken unter Verwendung von Reaktivfarbstoffen als Färbemittel, wobei
die Cyan-Tintenzusammensetzung C.I. Reactive Blue 15:1 als ein Färbemittel enthält, und
die Magenta-Tintenzusammensetzung C.I. Reactive Red 245 als ein Färbemittel enthält.

2. Das Tinten-Set zum Tintenstrahldrucken gemäß Anspruch 1, wobei der Gesamtgehalt an Färbemittel in der Gesamtmenge der Cyan-Tintenzusammensetzung 0,5 bis 20 Masse-% beträgt, und der Gesamtgehalt an Färbemittel in der Gesamtmenge der Magenta-Tintenzusammensetzung 0,5 bis 20 Masse-% beträgt.

3. Das Tinten-Set zum Tintenstrahldrucken gemäß Anspruch 1 oder 2, wobei der Gesamtgehalt an Färbemittel in der Gesamtmenge der Cyan-Tintenzusammensetzung 7 bis 15 Masse-% beträgt, und der Gesamtgehalt an Färbemittel in der Gesamtmenge der Magenta-Tintenzusammensetzung 7 bis 15 Masse-% beträgt.

4. Das Tinten-Set zum Tintenstrahldrucken gemäß irgendeinem der Ansprüche 1 bis 3, wobei das gesamte Färbemittel in der Cyan-Tintenzusammensetzung C.I. Reactive Blue 15:1 ist, und das gesamte Färbemittel in der Magenta-Tintenzusammensetzung C.I. Reactive Red 245 ist.

5. Ein Verfahren zum Bedrucken von Zellulosefaser, das Verfahren umfassend die Schritte:

A) Aufbringen einer Tinte auf Zellulosefaser unter Verwendung des Tinten-Sets gemäß irgendeinem der Ansprüche 1 bis 4 als Tinte mit einem Tintenstrahldrucker;
B) Erhitzen, um das Färbemittel in der Tintenzusammensetzung, welches im vorherigen Schritt aufgebracht wurde, reagieren und auf der Faser fixieren zu lassen; und
C) Auswaschen von nicht fixiertem Färbemittel, welche in der Zellulosefaser verblieben ist.

6. Das Verfahren zum Bedrucken von Zellulosefaser gemäß Anspruch 5, weiters umfassend einen Schritt:

D) Vorbehandlung der Faser vor Aufbringen der Tinte, durch Behandlung der Zellulosefaser mit einer wässrigen Lösung enthaltend wenigstens ein Leimungsmittel, eine alkalische Substanz, einen Reduktionsblocker, und ein hydrotropes Mittel.

**Revendications**

1. Ensemble d'encres pour impression à jet d'encre, l'ensemble d'encres comprenant au moins une composition d'encre cyan et une composition d'encre magenta pour impression à j et d'encre réalisée à l'aide de colorants réactifs en tant qu'agents colorants,
dans lequel la composition d'encre cyan contient le bleu réactif C.I. 15:1 en tant qu'agent colorant,
et la composition d'encre magenta contient le rouge réactif C.I. 245 en tant qu'agent colorant.

2. Ensemble d'encres pour impression à jet d'encre selon la revendication 1, dans lequel la teneur massique totale de l'agent colorant dans la masse totale de la composition d'encre cyan est comprise entre 0,5 % et 20 % et la teneur massique totale de l'agent colorant dans la masse totale de la composition d'encre magenta est comprise entre 0,5 % et 20 %.

3. Ensemble d'encres pour impression à jet d'encre selon la revendication 1 ou 2, dans lequel la teneur massique totale de l'agent colorant dans la masse totale de la composition d'encre cyan est comprise entre 7 % et 15% et la teneur massique totale de l'agent colorant dans la masse totale de la composition d'encre magenta est comprise entre 7 % et 15 %.

4. Ensemble d'encres pour impression à jet d'encre selon l'une quelconque des revendications 1 à 3, dans lequel l'agent colorant inclus dans la composition d'encre cyan est intégralement constitué de bleu réactif C.I. 15:1, et l'agent colorant inclus dans la composition d'encre magenta est intégralement constitué de rouge réactif C.I. 245.

5. Procédé d'impression d'une fibre cellulosique, le procédé comprenant les étapes consistant à :

    A) appliquer une encre sur une fibre cellulosique à l'aide de l'ensemble d'encres selon l'une quelconque des revendications 1 à 4 comme l'encre avec une imprimante à jet d'encre ;
    B) laisser l'agent colorant dans la composition d'encre appliquée lors de l'étape précédente agir et se fixer sur la fibre cellulosique sous l'effet de la chaleur; et
    C) éliminer par lavage toute trace d'agent colorant non fixé dans la fibre cellulosique.

6. Procédé d'impression d'une fibre cellulosique selon la revendication 5, comprenant en outre une étape consistant à:

    D) prétraiter la fibre avant d'appliquer l'encre, en appliquant une solution aqueuse contenant au moins un matériau d'encollage, une substance alcaline, un agent anti-réducteur et un agent hydrotropique sur la fibre cellulosique.

**EP 2 311 917 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0625576 B
- JP 4069696 B
- JP H11148035 B
- JP 2002241639 A
- JP 4076101 B
- JP 2003521572 PCT
- JP 2004359928 A
- JP 2005047990 A